Europäisches Patentamt

European Patent Office

Office européen des brevets

(11) Numéro de publication : **0 380 549 B1**

(12) **FASCICULE DE BREVET EUROPEEN**

(45) Date de publication du fascicule du brevet :
26.02.92 Bulletin 92/09

(21) Numéro de dépôt : **88908711.0**

(22) Date de dépôt : **29.09.88**

(86) Numéro de dépôt international :
**PCT/FR88/00480**

(87) Numéro de publication internationale :
**WO 89/02809 06.04.89 Gazette 89/08**

(51) Int. Cl.⁵ : **B25J 3/00, B25J 18/02**

(54) **BRAS DE MANIPULATION TELESCOPIQUE.**

(30) Priorité : **30.09.87 FR 8713517**

(43) Date de publication de la demande :
**08.08.90 Bulletin 90/32**

(45) Mention de la délivrance du brevet :
**26.02.92 Bulletin 92/09**

(84) Etats contractants désignés :
**BE DE GB IT SE**

(73) Titulaire : **EURITECH**
**12, rue du 20ème Chasseurs**
**F-41100 Vendôme (FR)**

(72) Inventeur : **GLACHET, Charles**
**42, rue du Maréchal-de-Rochambeau**
**F-41100 Vendôme (FR)**

(74) Mandataire : **Poulin, Gérard et als. c/o**
**SOCIETE DE PROTECTION DES INVENTIONS**
**et al**
**25, rue de Ponthieu**
**F-75008 Paris (FR)**

## Description

L'invention concerne un bras télescopique destiné à effectuer ou à commander une manipulation.

Un tel bras peut notamment être utilisé du côté maître ou du côté esclave d'un télémanipulateur télescopique maître esclave. Il peut aussi être utilisé pour constituer le bras d'un robot.

On connait du document FR-A-2 497 138 un bras de manipulateur télescopique comprenant au moins deux segments disposés selon un axe commun. Le segment d'extrémité comprend un corps tubulaire portant une genouillère à son extrémité, et une pièce intermédiaire dans laquelle peut tourner ce corps tubulaire. Le segment adjacent à ce segment d'extrémité comprend un corps tubulaire de plus grand diamètre dans lequel coulisse la pièce intermédiaire.

Selon qu'il s'agit d'un bras maître ou d'un bras esclave, la genouillère porte une poignée de commande ou un outil tel qu'une pince de préhension. La genouillère permet à la poignée ou à l'outil de disposer de deux degrés de liberté qui correspondent respectivement à un mouvement d'orientation (rotation de la poignée ou de l'outil autour de son axe propre) et à un mouvement d'élévation (pivotement de la poignée ou de l'outil autour d'un axe orthogonal à son axe propre et à l'axe du bras). Un mouvement d'actionnement de l'outil (serrage de la pince) est également transmis au travers de la genouillère.

Dans le document FR-A-2 497 138, ces trois mouvements sont transmis au travers du segment d'extrémité du bras par trois arbres disposés coaxialement selon l'axe du bras.

Dans le segment adjacent à ce segment d'extrémité, la transmission des trois mouvements de la genouillère est assurée par des arbres de section carrée dont l'un est disposé selon l'axe du bras. Les deux autres arbres, ainsi qu'un autre arbre de section carrée servant à commander la rotation du corps tubulaire du segment d'extrémité (mouvement d'azimut), sont disposés parallèlement à l'axe du bras et à une même distance de celui-ci, dans l'espace annulaire délimité entre les corps tubulaires des deux segments.

L'arbre de section carrée disposé selon l'axe du bras est solidarisé en rotation de l'arbre central du segment inférieur par quatre galets montés à l'extrémité supérieure de cet arbre central, de façon à pouvoir rouler sur les faces de l'arbre de section carrée parallèlement à l'axe du bras.

Chacun des autres arbres de section carrée est solidarisé en rotation d'un pignon supporté de façon tournante par la pièce intermédiaire, A cet effet, un manchon cylindrique solidaire du pignon porte également quatre galets aptes à rouler sur les faces de l'arbre correspondant, qui traverse ce manchon. Ces pignons sont tous identiques et s'engrènent sur des roues dentées également identiques fixées à l'extrémité supérieure des deux autres tubes concentriques du segment d'extrémité, ainsi qu'à l'extrémité supérieure du corps tubulaire de ce même segment.

Enfin, le déplacement axial de la pièce intermédiaire dans le segment adjacent au segment d'extrémité est assuré par un système à chaîne et roues dentées.

L'agencement des arbres de transmission de mouvements dans le bras de manipulation télescopique décrit dans le document FR-A-2 497 138 permet notamment d'effectuer le mouvement d'azimut sans entraîner aucun vrillage des arbres.

Cependant, l'utilisation de plusieurs arbres concentriques dans le corps tubulaire intérieur conduit à donner à ces arbres des masses différentes et à les supporter à leur extrémité inférieure au moyen de paliers dont les diamètres sont différents. Les frottements secs des roulements et l'inertie sont donc différents d'un arbre à l'autre, ce qui conduit à des différences dans les couples transmis et dans la répartition des efforts.

En pratique, ces différences se manifestent par une dissymétrie dans la transmission des mouvements d'orientation et d'élévation de la poignée et de l'outil, car ces mouvements nécessitent la rotation combinée de deux des arbres concentriques. Elles se manifestent également lorsqu'on effectue un mouvement d'azimut, car ce mouvement nécessite la rotation des autres arbres.

L'invention a principalement pour objet un bras de manipulation télescopique présentant les mêmes avantages que le bras décrit dans le document FR-A-2 497 136, mais dans lequel l'agencement des différents arbres assurant la transmission des mouvements au travers du bras est tel que les frottements et l'inertie sont totalement identiques pour chacune des commandes.

Selon l'invention, ce résultat est obtenu au moyen d'un bras de manipulation télescopique comprenant un corps tubulaire extérieur et un corps tubulaire intérieur disposés selon un axe commun et délimitant entre eux un espace annulaire dans lequel sont montés parallèlement et à égale distance dudit axe des premiers arbres rotatifs supportés de façon tournante par le corps tubulaire extérieur, des deuxièmes arbres rotatifs étant supportés de façon tournante à l'intérieur du corps tubulaire intérieur, ce dernier étant lui-même supporté de façon tournante par une pièce intermédiaire apte à coulisser dans le corps tubulaire extérieur selon ledit axe commun, des moyens étant prévus pour commander une translation de la pièce intermédiaire dans le corps tubulaire extérieur, la pièce intermédiaire supportant de façon tournante des premiers pignons identiques décalés selon ledit axe, chaque premier pignon étant traversé par l'un des premiers arbres et solidarisé en rotation de ce dernier par un moyen de transmission de mouvement, et des moyens d'entraînement par lesquels l'un des

2

premiers pignons est solidarisé en rotation du corps tubulaire intérieur et chacun des autres premiers pignons est solidarisé en rotation d'un deuxième arbre rotatif, caractérisé par le fait que les deuxièmes arbres rotatifs sont tous montés parallèlement et à égale distance dudit axe, lesdits moyens d'entraînement comprenant des deuxièmes pignons identiques fixés à chacun des deuxièmes arbres au niveau de chacun des autres premiers pignons, et des couronnes dentées identiques centrées sur ledit axe commun et supportées de façon tournante par l'organe intermédiaire au niveau de chacun des autres premiers pignons, chacune de ces couronnes dentées comportant une denture extérieure engrenée sur l'un des autres premiers pignons et une denture intérieure engrenée sur l'un des deuxièmes pignons.

De préférence, les moyens pour commander une translation de la pièce intermédiaire comprennent l'un des premiers arbres rotatifs, une crémaillère fixée à l'intérieur du corps tubulaire extérieur, parallèlement audit axe, un troisième pignon engrené sur cette crémaillère et dont l'axe est porté par l'organe intermédiaire et deux pignons de renvoi d'angle dont l'un est solidaire de l'axe du troisième pignon et dont l'autre est supporté de façon tournante par l'organe intermédiaire et solidarisé en rotation dudit premier arbre rotatif par un autre moyen de transmission de mouvement.

Dans un mode de réalisation préféré de l'invention, les premiers arbres étant cylindriques, chaque moyen de transmission de mouvement comprend une douille de guidage sur laquelle est fixé l'un des premiers pignons, cette douille étant supportée de façon tournante par l'organe intermédiaire, d'axe confondu avec l'un des premiers arbres et portant quatre séries de pions cylindriques orientés radialement vers l'intérieur et répartis selon quatre génératrices de la douille disposées à 90° les unes des autres, ces quatre séries de pions étant reçues dans quatre rainures longitudinales formées à 90° les unes des autres, à la périphérie du premier arbre, la largeur des rainures étant égale au diamètre de bagues de guidage montées par un palier sur chacun des pions.

Le corps tubulaire extérieur peut notamment être terminé par une plaque à chacune de ses extrémités, chacun des premiers arbres ayant deux extrémités supportées de façon tournante dans ces plaques par l'intermédiaire d'au moins un palier. Chacun des premiers arbres comporte alors, de préférence, une partie flexible à proximité de chacune des plaques.

De façon comparable, le corps tubulaire intérieur est terminé par une plaque à chacune de ses extrémités, chacun des deuxièmes arbres ayant deux extrémités supportées de façon tournante dans ces plaques par l'intermédiaire d'au moins un palier et portant les deuxièmes pignons au-delà de l'une de ces plaques, situées en permanence à l'intérieur du corps tubulaire extérieur.

Selon un autre aspect de l'invention, l'organe intermédiaire présente une partie tubulaire entourant le corps tubulaire intérieur et supportant ce dernier par des paliers à chacune de ses extrémités, et une partie de plus grand diamètre supportant les premiers pignons.

Un mode de réalisation préféré de l'invention va maintenant être décrit, à titre d'exemple non limitatif, en se référant aux dessins annexés dans lesquels :
– la figure 1 représente schématiquement un télémanipulateur télescopique dont les bras maître et esclave sont réalisés conformément à l'invention,
– la figure 2 est une vue en coupe longitudinale selon la ligne II-II de la figure 3, représentant de façon schématique un bras télescopique conforme à l'invention,
– la figure 3 est une vue en coupe selon la ligne III-III de la figure 2,
– la figure 4 est une vue en coupe représentant à plus grande échelle une partie du bras de la figure 2,
– la figure 5 est une vue en coupe longitudinale représentant à plus grande échelle l'une des douilles de guidage assurant la transmission d'un mouvement de rotation entre chacun des arbres disposés dans l'espace annulaire formé entre les deux corps tubulaires des bras et le pignon correspondant supporté par l'organe intermédiaire, et
– la figure 6 est une vue en coupe selon la ligne VI-VI de la figure 5.

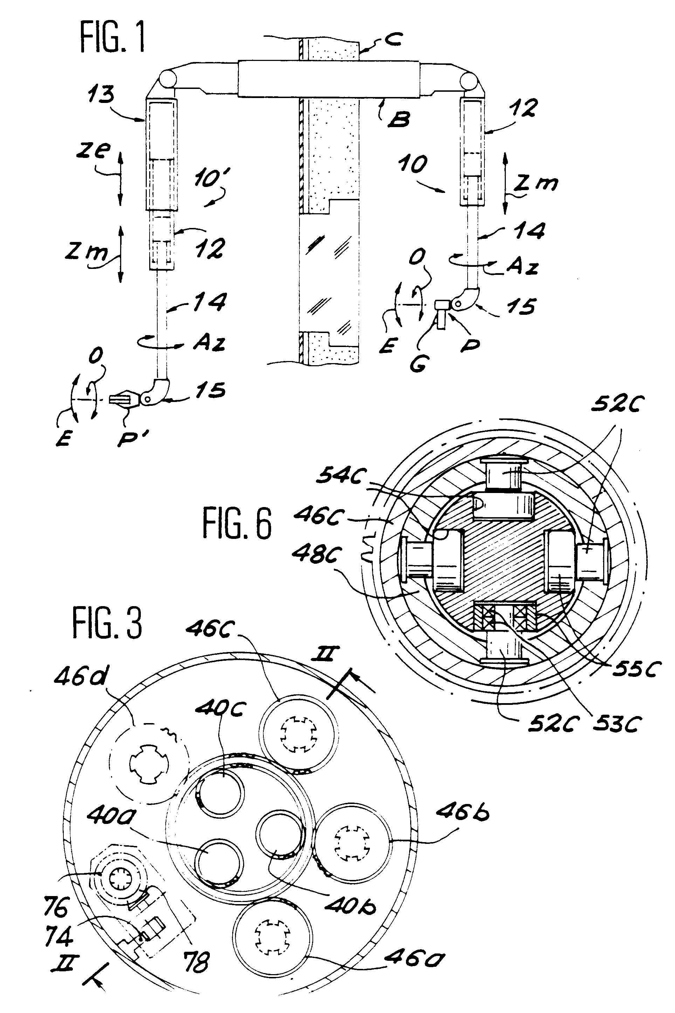

La figure 1 représente de façon schématique un télémanipulateur maître-esclave dont les bras télescopiques sont avantageusement réalisés conformément à l'invention.

De façon connue, ce télémanipulateur comprend un bras maître 10 et un bras esclave 10′ articulés par des axes parallèles, appelés axes d'épaule, sur un bloc de traversée B dont l'axe est perpendiculaire aux axes d'épaule. Le bloc B traverse de façon étanche une cloison C d'une cellule de confinement dans laquelle est placé le bras esclave 10′. Le montage du bloc B dans la cloison C autorise une rotation du bloc autour de son axe propre.

Les bras 10 et 10′ sont télescopiques. Le bras maître 10 comprend deux segments 12 et 14, appelés respectivement segment supérieur et segment inférieur, aptes à coulisser l'un dans l'autre selon l'axe du bras. Plus précisément, le segment supérieur 12 est articulé à l'une de ses extrémités sur le bloc de traversée B et le segment inférieur 14 coulisse dans le segment inférieur et porte une genouillère 15 à son extrémité opposée. L'ensemble constitué par les segments 12 et 14 et par la genouillère 15 constitué un module qui se retrouve à l'identique dans le bras esclave 10′.

Comme on le verra plus en détail ultérieurement, au mouvement d'allongement Zm permis par le coulissement du segment 14 dans le segment 12 s'ajoute un mouvement de rotation autour du bras de la partie du segment 14 portant la genouillère. Ce dernier mouvement, appelé mouvement d'azimut, est désigné par Az sur la figure 1.

Sur la genouillère 15 du bras maître 10 est articulée une poignée de commande P. Cette articulation est telle que la poignée peut tourner autour de son axe propre (mouvement d'orientation 0) et autour d'un axe orthogonal à ce dernier ainsi qu'à l'axe du bras (mouvement d'élévation E). La poignée P porte en outre une gâchette G de commande du serrage de la pince portée par le bras esclave 10'.

Comme on l'a mentionné précédemment, le bras esclave comprend un module formé d'un segment supérieur 12, d'un segment inférieur 14 et d'une genouillère 15, ce module étant identique à celui du bras maître. Comme sur le bras maître, une extrémité du segment supérieur 12 peut être articulée directement sur le bloc de traversée B.

Cependant, dans l'exemple de réalisation représenté sur la figure 1, le bras esclave 10' comprend un troisième segment 13 interposé entre le segment 12 et le bloc de traversée. Plus précisément, le segment supérieur 12 coulisse selon l'axe du bras dans le troisième segment 13, dont l'extrémité opposée est articulée sur le bloc de traversée B. Cette disposition permet d'ajouter aux possibilités d'allongement Zm du bras esclave commandées par le bras maître des possibilités d'allongement supplémentaires Ze, commandées électriquement. Cette caractéristique bien connue permet d'accéder à certaines zones de la cellule sans modifier la position de l'opérateur.

Sur la genouillère 15 du bras esclave 10' est articulé un outil constitué ici par une pince de préhension P'. Le module constitué par les segments 12 et 14 et par la genouillère 15 étant identique à celui du bras maître 10, la genouillère 15 dispose également des mouvements d'allongement Zm et d'azimut Az et la pince P' des mouvements d'orientation 0 et d'élévation E, ainsi que d'un mouvement de serrage.

Le télémanipulateur est équipé, de plus, de moyens internes aux bras et au bloc de traversée, permettant de transmettre au bras esclave 10' et à la pince P' tous les mouvements impartis au bras maître 10 et à la poignée de commande P par l'opérateur.

La transmission des mouvements au travers du bloc de traversée B est réalisée de façon conventionnelle, par exemple au moyen d'arbres tournants équipés de pignons coniques à leurs extrémités.

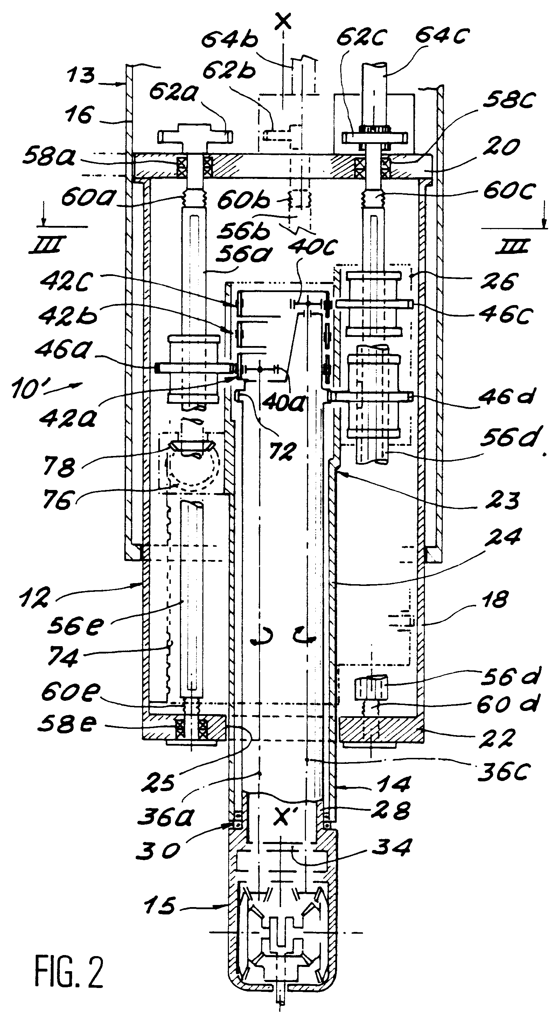

La structure de l'ensemble formé par les segments supérieur 12 et inférieur 14 va maintenant être décrite en détail en se référant aux figures 2 à 6, dans le cas du bras esclave 10'. Comme on l'a déjà mentionné, la structure des segments constituant le bras maître est identique.

On reconnait sur la figure 2 le troisième segment 13 du bras esclave, le segment supérieur 12, le segment inférieur 14 et la genouillère 15. Les trois segments sont disposés selon un axe commun XX' constituant l'axe du bras.

Le segment 13 est constitué principalement par un tube 16 centré sur l'axe XX'.

Le segment supérieur 12 comprend un corps tubulaire 18 appelé corps tubulaire extérieur, également centré sur l'axe XX'. Ce corps tubulaire 18 est fermé, respectivement à ses extrémités supérieure et inférieure, par des plaques radiales 20 et 22. Le tube 18 est monté de façon coulissante à l'intérieur du tube 16 du segment 13.

Le segment inférieur 14 comporte quant à lui une pièce intermédiaire 23 comprenant une partie tubulaire 24 disposée coaxialement à l'intérieur du corps tubulaire 18 et traversant une ouverture circulaire 25 formée dans la plaque 22. La pièce intermédiaire 23 comprend de plus une partie de plus grand diamètre 26, dont le contour est représenté schématiquement en traits mixtes sur la figure 2. Cette partie 26 est fixée à l'extrémité supérieure de la partie tubulaire 24 et montée de façon coulissante dans le corps tubulaire 18.

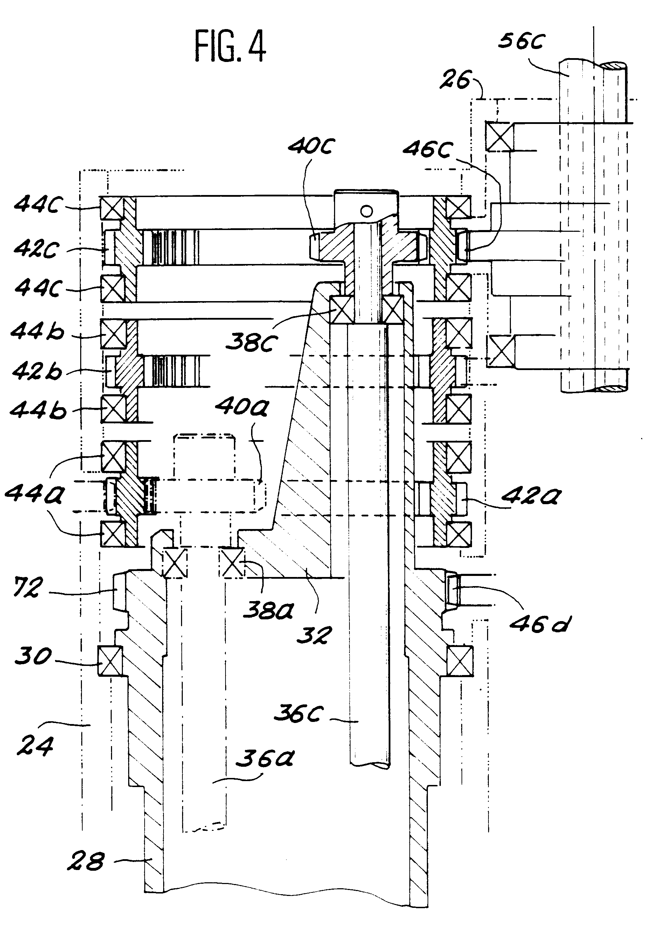

Les segments inférieurs 14 du bras esclave et maître comprennent un corps tubulaire intérieur 28 disposé selon l'axe XX' à l'intérieur de la partie tubulaire 24. Le corps tubulaire 28 est supporté de façon tournante à chacune de ses extrémités par des paliers 30. Les extrémités du corps tubulaire intérieur 28 sont fermées respectivement par une plaque radiale supérieure 32 (figure 4) et par une plaque radiale inférieure 34 (figure 2).

Trois arbres 36a, 36b et 36c sont supportés de façon tournante dans le corps tubulaire intérieur 28. A cet effet, leurs extrémités sont reçues dans des paliers 38a, 38b et 38c montés dans les plaques radiales 32 et 34. Sur les figures 2 et 4, seuls les arbres 36a et 36c et les paliers qui les supportent sont représentés. Les arbres 36a, 36b et 36c sont des arbres cylindriques, de même diamètre, dont les axes sont tous disposés parallèlement et à une même distance de l'axe XX'.

Comme le montre la figure 4, à leurs extrémités situées au-dessus de la plaque 32, chacun des arbres 36a, 36b et 36c porte un pignon 40a, 40b, 40c. Les trois pignons 40a, 40b et 40c sont tous identiques, c'est-à-dire qu'ils ont le même diamètre et le même nombre de dents. En revanche, la longueur des arbres 36a, 36b et 36c est différente, de telle sorte que les trois pignons 40a, 40b et 40c sont situés dans trois plans différents perpendiculaires à l'axe XX', la distance séparant deux plans adjacents étant la même.

Chacun des pignons 40a, 40b et 40c est engréné sur la denture intérieure d'une couronne dentée 42a, 42b et 42c supportée de façon tournante par la pièce intermédiaire 23. Chacune de ces couronnes dentées est montée dans la pièce 23 par l'intermédiaire de deux paliers 44a, 44b et 44c, respectivement. Les trois couronnes dentées 42a, 42b et 42c sont disposées coaxialement et l'une au-dessus de l'autre selon l'axe XX′ et elles sont identiques, c'est-à-dire que les dimensions et les nombres de dents de leurs dentures intérieure et extérieure sont les mêmes.

La denture extérieure de chacune des roues dentée 42a, 42b et 42c est engrenée sur un pignon 46a, 46b et 46c (figure 3) supporté de façon tournante par la pièce 23. Les axes de ces pignons 46a, 46b et 46c sont parallèles et situés à égale distance de l'axe XX′, de telle sorte que ces pignons sont répartis en couronne dans l'espace annulaire formé entre le corps tubulaire 18 et la partie tubulaire 24. Les pignons 46a, 46b et 46c sont également tous identiques, c'est-à-dire que le diamètre de leurs dentures et le nombre de dents sont les mêmes.

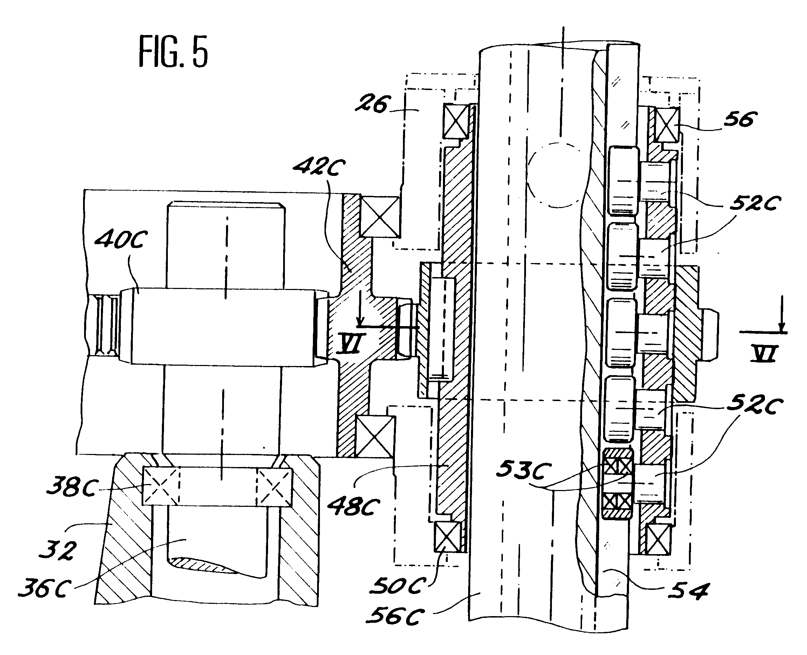

On a représenté plus en détail sur la figure 5 le montage du pignon 46c dans la partie 26 de la pièce 23. La description qui va suivre s'applique également au montage des pignons 46a et 46b dans la partie 26. Le pignon 46c est fixé par une clavette sur une douille de guidage 48c dont les extrémités sont montées de façon tournante dans la partie 26 par deux paliers 50c. Cette douille 48c porte sur sa face intérieure quatre séries de pions cylindriques identiques 52c (figure 6) orientés radialement vers l'intérieur et répartis selon quatre génératrices de la douille disposées à 90° les unes des autres. Ces quatre séries de pions 52c portent, par l'intermédiaire de paliers 53c, des bagues de guidage 55c qui sont reçues dans quatre rainures longitudinales 54c formées à 90° les unes des autres sur la surface périphérique d'un arbre cylindrique 56c supporté de façon tournante par le segment supérieur 12 du bras. La largeur des rainures 54c est approximativement égale au diamètre de chacune des bagues 55c.

Plus précisément (figure 2) les extrémités de l'arbre 56c sont montées dans les plaques 20 et 22 du segment 12 par des paliers 58c. De préférence, l'arbre 56c présente deux parties flexibles 60c à proximité immédiate de ses extrémités reçues dans les paliers 58c, pour donner à l'ensemble un caractère isostatique.

Grâce à l'agencement qui vient d'être décrit, on conçoit qu'un mouvement de rotation de l'arbre 56c autour de son axe est transmis avec un frottement minimum au pignon 46c. Un dispositif analogue à celui qui vient d'être décrit en se référant aux figures 5 et 6 permet d'entraîner en rotation chacun des pignons 46a et 46b au moyen de deux autres arbres 56a et 56b montés de façon tournante dans le segment intermédiaire 12 par des paliers 58a et 58b reçus dans les plaques 20 et 22.

Les arbres 56a, 56b, 56c sont disposés parallèlement entre eux et à l'axe XX′, à égale distance de celui-ci et pratiquement au milieu de l'espace annulaire formé entre le corps tubulaire 18 et la partie tubulaire 24. Comme l'arbre 56c, les arbres 56a et 56b présentent deux parties flexibles 60a et 60b au voisinage de leurs extrémités reçues dans les paliers 58a et 58b. En outre, les trois arbres sont identiques, c'est-à-dire qu'ils ont le même diamètre extérieur.

A leur extrémité située au-dessus de la plaque 20, chacun des arbres 56a, 56b et 56c porte un pignon 62a, 62b et 62c. Les trois pignons 62a, 62b et 62c sont également identiques, c'est-à-dire qu'ils ont le même diamètre et le même nombre de dents.

Dans le cas du bras esclave comportant un troisième segment 13, chacun des pignons 62a, 62b et 62c est engrené sur un autre pignon (non représenté) supporté de façon tournante par la plaque 20. Cet autre pignon est traversé par un arbre 64a, 64b et 64c supporté de façon tournante par le segment 13 et solidarisé en rotation dudit autre pignon par un mécanisme comparable à celui qui a été décrit précédemment en se référant aux figures 5 et 6.

Les axes des arbres 64a, 64b et 64c sont parallèles à l'axe XX′, équidistants de ce dernier et angulairement décalés par rapport aux axes des arbres 56a, 56b et 56c. Ils sont tous identiques, de même que les pignons qu'ils entraînent.

A leur extrémité supérieure, les arbres 64a, 64b et 64c coopèrent par des pignons à renvoi d'angle (non représentés) avec les arbres tournants logés dans le bloc de traversée B.

Dans le cas (non représenté) d'un bras esclave totalement identique au bras maître, c'est-à-dire ne comprenant pas le troisième segment 13, de tels pignons à renvoi d'angle sont placés directement entre les extrémités adjacentes des arbres 56a, 56b et 56c et des arbres tournants logés dans le bloc de traversée B.

Les trois commandes de mouvements qui viennent d'être décrites avec des références portant respectivement les indices a, b et c servent à commander les mouvements d'orientation 0 et d'élévation E de la pince P′, ainsi que le mouvement de serrage de la pince. A cet effet, la genouillère 15 contient de façon classique un ensemble d'engrenages agencés de telle sorte qu'une rotation de l'arbre 36b a pour effet de commander le mouvement de serrage de la pince, qu'une rotation dans le même sens des arbres 36a et 36c a pour effet de commander le mouvement d'élévation E de la pince et qu'une rotation en sens opposé des arbres 40a et 40c a pour effet de commander le mouvement d'orientation 0.

Pour commander le mouvement de rotation du corps tubulaire intérieur 28 à l'intérieur de la partie tubulaire 24, c'est-à-dire le mouvement d'azimut Az, on utilise un agencement comparable à celui qui vient d'être décrit.

Plus précisément, et comme l'illustrent les figures 2 et 4, le corps tubulaire intérieur 28 porte à son extrémité supérieure et sur sa face extérieure une couronne dentée 72 placée en-dessous des couronnes dentées 42a, 42b et 42c. Le diamètre de cette couronne dentée 72 est légèrement inférieur ou égal au diamètre extérieur des couronnes dentées 42a à 42c. Un pignon 46d supporté de façon tournante par la partie 26 de la pièce 23 est engrené sur la couronne dentée 72. L'axe de ce pignon 46d est parallèle à l'axe XX' et situé à une même distance de cet axe que les axes des pignons 46a à 46c. Ce pignon 46d est traversé selon son axe par un arbre cylindrique 56d disposé parallèlement à l'axe XX' du bras et à égale distance de cet axe que les arbres 56a à 56c. Un mécanisme analogue à celui qui a été décrit précédemment en se référant aux figures 5 et 6 transmet au pignon 46d toute rotation de l'arbre 56d, tout en permettant leur déplacement relatif selon l'axe XX' nécessité par le mouvement Zm.

Comme les arbres 56a à 56c, l'arbre 56d est supporté à ses extrémités par des paliers montés dans les plaques 20 et 22. Il comporte également des parties flexibles 60d à proximité de ses extrémités montées dans les plaques 20 et 22.

L'entraînement en rotation de l'arbre 56d est assuré de la même manière que pour les arbres 56a à 56c. Il ne sera donc pas décrit à nouveau.

Enfin, pour assurer le déplacement selon l'axe XX' ou segment inférieur 14 dans le segment supérieur 12 (mouvement d'allongement Zm), le corps tubulaire 18 supporte sur sa face intérieure et selon une génératrice une crémaillère 74. Un pignon 76, dont l'axe est orthogonal à l'axe XX' et supporté par la partie 26 de la pièce 23, s'engrène sur la crémaillère 74. Ce pignon 76 est solidaire d'un pignon conique (non représenté) qui s'engrène sur un deuxième pignon conique 78 d'axe parallèle à l'axe XX' et disposé dans l'espace annulaire formé entre le corps tubulaire extérieur 18 et la partie tubulaire 24.

Le pignon 78 est traversé selon son axe par un arbre 56e d'axe parallèle à l'axe XX' et disposé à la même distance de ce dernier que les arbres 56a à 56d, dans l'espace annulaire formé entre le tube 18 et la partie tubulaire 24. Un mécanisme identique à celui qui a été décrit précédemment en se référant aux figures 5 et 6 est interposé entre le pignon 78 et l'arbre 56e, de façon à solidariser ces deux pièces en rotation tout en autorisant leur déplacement relatif selon l'axe XX'.

Le supportage de l'arbre 56e par le segment 12 du bras est assuré par des paliers 58e montés dans les plaques 20 et 22 et l'arbre 56e comprend des parties flexibles 60e à proximité de ses extrémités reçues dans ces paliers. Par ailleurs, l'entraînement en rotation de l'arbre 56e à partir du segment 13 du bras est réalisé de la même manière que celui des arbres 56a à 56d.

Grâce à l'agencement qui vient d'être décrit, la réalisation d'un mouvement d'azimut n'entraîne aucun vrillage des arbres commandant les autres mouvements.

De plus, étant donné que les dimensions et l'agencement des différentes pièces commandant les mouvements d'orientation 0, d'élévation E et de serrage est parfaitement symétrique par rapport à l'axe XX', les frottements et les inerties sont les mêmes quel que soit le mouvement commandé. Par conséquent, la commande des mouvements d'élévation E et d'orientation 0, qui nécessite l'actionnement des deux mécanismes dont les références sont affectées des indices a et c dans la description qui précède, s'effectue sans qu'aucun autre mouvement parasite tel qu'un mouvement d'azimut ne soit induit.

Un autre avantage du bras de manipulation télescopique qui vient d'être décrit est que l'agencement particulier des organes assurant la transmission des mouvements permet éventuellement d'assurer un coulissement étanche du segment 12 dans le segment 13 et un coulissement étanche du segment 14 dans le segment 12. Pour cela, il suffit de placer un joint d'étanchéité annulaire à l'extrémité inférieure du corps tubulaire 16 et à l'intérieur de la plaque 22. Il est ainsi possible de supprimer la manchette d'étanchéité qui entoure fréquemment le bras esclave et aussi de travailler sous des atmosphères particulières et notamment dans l'eau.

En outre, l'ensemble constitué par le segment supérieur 12, le segment inférieur 14 et la genouillère 15 constitue un module qui peut être utilisé indifféremment du côté maître ou du côté esclave d'un télémanipulateur, sans subir aucun changement. Ce module peut également être utilisé comme bras de robot, sa commande étant alors assurée directement par des moteurs entraînant les arbres commandant chacun des mouvements, ces moteurs étant commandés à distance à l'aide d'un pupitre.

Enfin, comme tous les bras de manipulation dont la commande est assurée par des arbres tournants, le bras selon l'invention est particulièrement fiable et ne nécessite pas les interventions fréquentes requises par les dispositifs à câbles ou rubans.

## Revendications

1. Bras de manipulation télescopique comprenant un corps tubulaire extérieur (18) et un corps tubulaire intérieur (28) disposés selon un axe commun (XX') et délimitant entre eux un espace annulaire dans lequel sont montés parallèlement et à égale distance dudit axe des premiers arbres rotatifs (56a à 56e) supportés de façon tournante par le corps tubulaire extérieur (18), des deuxièmes arbres rotatifs (36a à 36c) étant supportés de façon tournante à l'intérieur du corps tubulaire intérieur (28), ce dernier étant lui-même supporté de façon tournante par une pièce intermédiaire (23) apte à coulisser dans le corps tubulaire extérieur selon ledit axe commun, des moyens (74, 76, 78, 56e) étant prévus pour commander une translation de la pièce intermédiaire (23) dans le corps tubulaire extérieur (18), la pièce intermédiaire (23) supportant de façon tournante des premiers pignons identiques (46a à 46d) décalés selon ledit axe, chaque premier pignon étant traversé par l'un des premiers arbres (56a à 56d) et solidarisé en rotation de ce dernier par un moyen de transmission de mouvement (48c, 52c, 54c), et des moyens d'entraînement (40a, 40b, 40c, 42a, 42b, 42c, 72) par lesquels l'un (46d) des premiers pignons est solidarisé en rotation du corps tubulaire intérieur (28) et chacun des autres premiers pignons (46a à 46c) est solidarisé en rotation d'un deuxième arbre rotatif (36a à 36c), caractérisé par le fait que les deuxièmes arbres rotatifs (36a à 36c) sont tous montés parallèlement et à égale distance dudit axe (XX'), lesdits moyens d'entraînement comprenant des deuxièmes pignons identiques (40a à 40c) fixés à chacun des deuxièmes arbres au niveau de chacun des autres premiers pignons (46a à 46c), et des couronnes dentées identiques (42a à 42c) centrées sur ledit axe commun et supportées de façon tournante par l'organe intermédiaire (23) au niveau de chacun des autres premiers pignons, chacune de ces couronnes dentées comportant une denture extérieure engrenée sur l'un des autres premiers pignons (46a à 46c) et une denture intérieure engrenée sur l'un des deuxièmes pignons (40a à 40c).

2. Bras de manipulation selon la revendication 1, caractérisé en ce que les moyens pour commander une translation de la pièce intermédiaire (23) comprennent l'un (56e) des premiers arbres rotatifs, une crémaillère (74) fixée à l'intérieur du corps tubulaire extérieur (18), parallèlement audit axe, un troisième pignon (76) engrené sur cette crémaillère et dont l'axe est porté par l'organe intermédiaire (23) et deux pignons de renvoi d'angle dont l'un est solidaire de l'axe du troisième pignon (76) et dont l'autre (78) constitue un autre premier pignon, supporté de façon tournante par l'organe intermédiaire et solidarisé en rotation dudit premier arbre (56e) par un autre moyen de transmission de mouvement.

3. Bras de manipulation selon l'une quelconque des revendications 1 et 2, caractérisé en ce que, les premiers arbres (56a à 56c) étant cylindriques, chaque moyen de transmission de mouvement comprend une douille de guidage (48c) sur laquelle est fixé l'un des premiers pignons (46a à 46d, 78), cette douille étant supportée de façon tournante par l'organe intermédiaire, d'axe confondu avec l'un des premiers arbres et portant quatre séries de pions cylindriques (52c) orientés radialement vers l'intérieur et répartis selon quatre génératrices de la douille disposées à 90° les unes des autres, ces quatre séries de pions étant reçues dans quatre rainures longitudinales (54c) formées à 90° les unes des autres, à la périphérie du premier arbre, la largeur des rainures (54c) étant approximativement égale au diamètre de bagues de guidage (55c) montées par un palier (53c) sur chacun des pions (52c).

4. Bras de manipulation selon l'une quelconque des revendications 1 à 3, caractérisé en ce que le corps tubulaire extérieur (18) est terminé par une plaque (20, 22) à chacune de ses extrémités, chacun des premiers arbres (56a à 56e) ayant deux extrémités supportées de façon tournante dans ces plaques par l'intermédiaire d'au moins un palier (58a à 58e).

5. Bras de manipulation selon la revendication 4, caractérisé en ce que chacun des premiers arbres (56a à 56e) comporte une partie flexible (60a à 60e) à proximité de chacune des plaques.

6. Bras de manipulation selon l'une quelconque des revendications 1 à 5, caractérisé en ce que le corps tubulaire intérieur (28) est terminé par une plaque (32, 34) à chacune de ses extrémités, chacun des deuxièmes arbres (36a à 36c) ayant deux extrémités supportées de façon tournante dans ces plaques par l'intermédiaire d'au moins un palier (38a à 38c) et portant les deuxièmes pignons (40a à 40c) au-delà de l'une de ces plaques, situées en permanence à l'intérieur du corps tubulaire extérieur (18).

7. Bras de manipulation selon l'une quelconque des revendications 1 à 6, caractérisé en ce que l'organe intermédiaire (23) présente une partie tubulaire (24) entourant le corps tubulaire intérieur (28) et supportant ce dernier par des paliers (30) à chacune de ses extrémités, et une partie de plus grand diamètre (26) supportant les premiers pignons (46a à 46d, 78).

**Patentansprüche**

1. Teleskopischer Ausleger für ein Handhabungsgerät, mit einem äußeren Rohrkörper (18) und einem inneren Rohrkörper (28), welche entlang einer gemeinsamen Achse (XX') angeordnet sind und zwischen sich einen ringförmigen Raum begrenzen, in welchem drehbar im äußeren Rohrkörper (18) gelagerte erste Wellen (56a bis 56e) parallel zu der genannten Achse und in gleichem Abstand zu dieser angeordnet sind, während zweite Wellen (36a bis 36c) drehbar im Inneren des inneren Rohrkörpers (28) gelagert sind, wobei der Letztere drehbar in einem Zwischenstück (23) gelagert ist, welches entlang der gemeinsamen Achse verschieblich im äußeren Rohrkörper angeordnet ist, wobei Einrichtungen (74, 76, 78, 56e) zum Herbeiführen einer Verschiebung des Zwischenstücks (23) im äußeren Rohrkörper (18) vorgesehen sind, entlang der genannten Achse beabstandete, identische erste Ritzel (46a bis 46d) drehbar im Zwischenstück (23) gelagert sind, jedes erste Ritzel von einer der ersten Wellen (56a bis 56d) durchsetzt und durch eine Bewegungsübertragungseinrichtung (48c, 52c, 54c) unverdrehbar mit dieser verbunden ist, und Antriebsübertragungseinrichtungen (40a, 40b, 40c, 42a, 42b, 42c, 72) vorgesehen sind, mittels welcher eines (46d) der ersten Ritzel antriebsübertragend mit dem inneren Rohrkörper (28) und jedes der anderen ersten Ritzel (46a bis 46c) antriebsübertragend mit einer zweiten drehbaren Welle (36a bis 36c) verbunden ist, dadurch gekennzeichnet, daß alle zweiten drehbaren Wellen (36a bis 36c) parallel zu der genannten Achse (XX') und in gleichem Abstand dazu angeordnet sind, daß die Antriebsübertragungseinrichtungen in Höhe der anderen ersten Ritzel (46a bis 46c) auf jeder der zweiten Wellen festgelegte, identische zweite Ritzel (40a bis 40c) sowie um die genannte gemeinsame Achse zentriert in Höhe jedes der anderen ersten Ritzel drehbar am Zwischenstück (23) gelagerte, identische Zahnkränze (42a bis 42c) aufweisen, wobei jeder Zahnkranz eine mit einem der anderen ersten Ritzel (46a bis 46c) kämmende Außenverzahnung und eine mit einem der zweiten Ritzel (40a bis 40c) kämmende Innenverzahnung aufweist.

2. Teleskopischer Ausleger für ein Handhabungsgerät nach Anspruch 1, dadurch gekennzeichnet, daß die Einrichtung zum Herbeiführen einer Verschiebung des Zwischenstücke (23) eine (56e) der ersten drehbaren Wellen, eine parallel zur genannten Achse an der Innenseite des äußeren Rohrkörpers (18) negebrachte Zahnstange (74), ein drehbar am Zwischenstück gelagertes, mit der Zahnstange kämmendes drittes Ritzel (76) und zwei Ritzel für rechtwinklige Antriebsübertragung umfaßt, von denen eines unverdrehbar und koaxial mit dem dritten Ritzel (76) verbunden ist und das andere (78) ein weiteres erstes Ritzel darstellt, welches drehbar im Zwischenstück gelagert und über eine weitere Bewegungsübertragungseinrichtung unverdrehbar mit der genannten ersten Welle (56e) verbunden ist.

3. Teleskopischer Ausleger für ein Handhabungsgerät nach einem der Ansprüche 1 und 2, dadurch gekennzeichnet, daß, bei zylindrischer Form der ersten Wellen (56a bis 56c), jede Bewegungsübertragungseinrichtung eine Führungsbuchse (48c) aufweist, auf welcher eines der ersten Ritzel (46a bis 46d, 78) festgelegt ist, daß die Führungsbuchse koaxial mit jeweils einer der ersten Wellen drehbar im Zwischenstück gelagert ist und vier Reihen von zylindrischen Zapfen (52c) trägt, welche radial einwärts ausgerichtet und entlang im Winkel von 90° zueinander versetzten Mantellinien der Buchse verteilt angeordnet sind, wobei die vier Reihen von Zapfen in im Winkel von 90° zueinander versetzt am Umfang der ersten Welle ausgebildeten Längsnuten (54c) Aufnahme finden und die Breite der Nuten (54c) im wesentlichen gleich dem Durchmesser von Führungsringen (55c) ist, welche mittels jeweils eines Lagers (53c) auf jedem der Zapfen (52c) gelagert sind.

4. Teleskopischer Auslager für ein Handhabungsgerät nach einem der Ansprüche 1 bis 3, dadurch gekennzeichnet, daß der äußere Rohrkörper (18) an jedem seiner Enden durch eine Platte (20, 22) abgeschlossen ist und daß die beiden Enden aller ersten Wellen (56a bis 56e) mittels jeweils wenigstens eines Lagers (58a bis 58e) drehbar in den Platten gelagert sind.

5. Teleskopischer Ausleger für ein Handhabungsgerät nach Anspruch 4, dadurch gekennzeichnet, daß jede erste Welle (56a bis 56e) zunächst jeder der Platten einen flexiblen Abschnitt (60a bis 60e) aufweist.

6. Teleskopischer Ausleger für ein Handhabungsgerät nach einem der Ansprüche 1 bis 5, dadurch gekennzeichnet, daßder innere Rohrkörper (28) an jedem Enden durch jeweils eine Platte (32, 34) abgeschlossen ist und daß jede der zweiten Wellen (36a bis 36c) mit ihren beiden Enden mittels jeweils wenigstens eines Lagers (38a bis 38c) drehbar in den genannten Platten gelagert ist und die jeweiligen zweiten Ritzel (40a bis 40c) jenseits einer der permanent im Inneren des äußeren Rohrkörpers (18) angeordneten Platten tragen.

7. Teleskopischer Ausleger für ein Handhabungsgerät nach einem der Ansprüche 1 bis 6, dadurch gekennzeichnet, daß das Zwischenstück (23) einen den inneren Rohrkörper (28) umgebenden Abschnitt (24), in welchem dieser mittels Lagern (30) an beiden Enden gelagert ist, sowie einen Abschnitt (26) größeren Durchmessers aufweist, in welchem die ersten Ritzel (46a bis 46d, 78) gelagert sind.

## Claims

1. Telescopic manipulation arm incorporating an external tubular body (18) and an internal tubular body (28) arranged along a common axis (XX') and defining between them an annular space in which are mounted in parallel and equidistantly of said axis first rotary shafts (56a to 56e) supported in rotary manner by the external tubular body (18) and second rotary shafts (36a to 36c) are supported in rotary manner within the external tubular body (28), the latter being supported in rotary manner by an intermediate part (23) able to slide in the external tubular body along said common axis, means (74, 76, 78, 56e) being provided for controlling a translation of the intermediate part (23) in the external tubular body (18), the intermediate part (23) supporting in rotary manner first identical pinions (46a to 46d) displaced along said axis, each first pinion being traversed by one of the first shafts (56a to 56d) and made integral in rotation with the latter by a movement transmission means (48c, 52c, 54c), and drive means (40a, 40b, 40c, 42a, 42b, 42c, 72) by which one (46d) of the first pinions is integral in rotation with the internal tubular body (28) and each of the other pinions (46a to 46c) is integral in rotation with a second rotary shaft (36a to 36c), which is characterized in that the second rotary shafts (36a to 36c) are all mounted in parallel and equidistantly of said axis (XX'), said drive means incorporating second identical pinions (40a to 40c) fixed to each of the second shafts at each of the other first pinions (46a to 46c), and identical toothed gears (42a to 42c) centred on said common axis and supported in rotary manner by the intermediate member (23) at each of the other first pinions, each of the toothed gears having an external tooth system engaged on one of the other first pinions (46a to 46c) and an internal tooth system engaged on one of the second pinions (40a to 40c).

2. Manipulation arm according to claim 1, characterized in that the means for controlling a translation of the intermediaire part (23) incorporate one (56c) of the first rotary shafts, a rack (74) fixed to the interior of the external tubular body (18) parallel to said axis, a third pinion (76) engaged on said rack and whose pin is carried by the intermediate member (23) and two bevel gears or pinions, whereof one is integral with the pin of the third pinion (76) and whereof the other (78) is supported in rotary manner by the intermediate member and rendered integral in rotation with the first rotary shaft (56e) by another movement transmission means.

3. Manipulation arm according to either of the claims 1 and 2, characterized in that with the first shafts (56a to 56c) being cylindrical, each movement transmission means comprises a guide bush (48c) to which is fixed one of the first pinions (46a to 46d, 78), said bush being supported in rotary manner by the intermediate member, whose axis coincides with one of the first shafts and carrying four series of cylindrical studs (52c) oriented radially towards the inside and distributed in accordance with four generatrixes of the bush at 90° from one another, said four series of studs being received in four longitudinal grooves (54c) at 90° of one another on the periphery of the first shaft, the width of the grooves (54c) being equal to the diameter of the guide rings (55c) mounted by means of a bearing (53c) on each of the studs (52c).

4. Manipulation arm according to any of the claims 1 to 3, characterized in that the external tubular body (18) is terminated by a plate (20, 22) at each of its ends, each of the first shafts (56a to 56e) having two ends supported in rotary manner in said plates by means of at least one bearing (58a to 58e).

5. Manipulation arm according to claim 4, characterized in that each of the first shafts (56a to 56e) has a flexible portion (60a to 60e) in the vicinity of each of the plates.

6. Manipulation arm according to any one of the claims 1 to 5, characterized in that the internal tubular body (28) is terminated by a plate (32, 34) at each of its ends, each of the second shafts (36a to 36c) having two ends supported in rotary manner in said plates by means of at least one bearing (38a to 38c) and carrying the second pinions (40a to 40c) beyond one of said plates, located permanently within the external tubular body (18).

7. Manipulation arm according to any one of the claims 1 to 6, characterized in that the intermediate member (23) has a tubular portion (24) surrounding the internal tubular body (28) and supporting the latter by bearings (30) at each of its ends, and a larger diameter portion (26) supporting the first pinions (46a to 46d, 78).

FIG. 1

FIG. 6

FIG. 3

FIG. 2

# FIG. 4

FIG.5